# FASCICULE DE BREVET EUROPEEN

(11) **EP 2 441 614 B1**
(45) Date de publication et mention de la délivrance du brevet: **05.06.2013**
(21) Numéro de dépôt: 11306308.5
(22) Date de dépôt: 07.10.2011
(51) Int. Cl.: B60K 17/346, B60K 23/08, B60T 8/175, B60K 6/52, B60T 8/1755, B60T 8/1769, B60W 30/02

(54) **Procédé d'assistance à la conduite d'un véhicule automobile**
Hilfsverfahren zur Steuerung eines Kraftfahrzeugs
Driving-assistance method of an automobile

(30) Priorité: 15.10.2010 FR 1058409
(43) Date de publication de la demande: 18.04.2012
(73) Titulaire: Renault s.a.s., 92100 Boulogne-Billancourt (FR)
(72) Inventeur: Boutron, Olivier, 27940 AUBEVOYE (FR); Foussard, François, 76100 ROUEN (FR); Kunc, Jérôme, 27950 LA CHAPELLE (FR); Romani, Nicolas, 75016 PARIS (FR)

(56) Documents cités:
- EP-A2- 1 270 305
- EP-A2- 1 686 031
- WO-A1-2006/045467
- GB-A- 2 418 648
- US-A1- 2003 130 782
- US-A1- 2006 124 374

## Description

La présente invention concerne le contrôle du comportement dynamique d'un véhicule automobile, particulièrement adapté pour un véhicule à quatre roues motrices. Pour cela, elle concerne un procédé de conduite assistée d'un véhicule automobile, un dispositif d'assistance à la conduite d'un véhicule automobile mettant en oeuvre un tel procédé et un véhicule automobile en tant que tels.

Il est connu de l'état de la technique un dispositif d'assistance à la conduite, appelé simplement ESP (à partir de sa dénomination anglo-saxonne « Electronic Stability Program »), qui remplit une fonction de contrôle et stabilité de la trajectoire d'un véhicule automobile. Plus précisément, un tel dispositif ESP remplit une première fonction d'anti-patinage, par exemple par l'intermédiaire d'un dispositif connu sous le nom d'ASR (à partir de sa dénomination anglo-saxonne « Anti Skid Regulation»), et une seconde fonction AYC de correction de trajectoire (à partir de sa dénomination anglo-saxonne « Active Yaw Control»). Par exemple, lorsqu'un véhicule automobile s'inscrit dans un virage à une vitesse longitudinale trop élevée compte tenu des limites physiques imposées par l'adhérence entre les pneumatiques et le sol dans le virage, il devient impossible de respecter la courbure de la route et le véhicule automobile commence à sous-virer. Le système ESP intervient alors automatiquement pour maintenir le véhicule sur la trajectoire désirée par le conducteur. De manière plus générale, si le véhicule s'écarte d'une trajectoire souhaitée par le conducteur (situation de sous-virage ou de survirage), le système ESP va envoyer des signaux de consigne de couple moteur et/ou de couple de freinage afin de corriger la trajectoire du véhicule.

Un autre dispositif d'assistance de l'état de la technique, connu sous le nom de « système 4x4 piloté », qui sera désigné par la suite SQP, met en oeuvre un pilotage de transfert de couples entre les quatre roues motrices d'un véhicule automobile. Un tel dispositif permet ainsi d'améliorer les performances d'un véhicule à quatre roues motrices, notamment sur des terrains accidentés, par exemple lors de situations de décollage, de franchissement d'obstacles, tout en assurant la sécurité des passagers.

Dans l'état de la technique, les deux dispositifs d'assistance ESP et SQP sont gérés de manière indépendante et il apparaît aujourd'hui que leur cohabitation au sein d'un véhicule automobile n'est pas optimale. Par exemple, dans certaines situations particulières comme une utilisation hors piste d'un véhicule à quatre roues motrices, on rencontre des conditions de conduite sur des dévers, des fortes pentes, etc., très différentes de celles rencontrées lors d'un usage routier conventionnel. Dans de telles situations, le fonctionnement du système ESP est perturbé et non optimisé.

Pour améliorer l'assistance à la conduite, certains documents parmi lesquels les documents US5247443, EP1188597, décrivent des solutions pour améliorer la fonction SQP d'un véhicule à quatre roues motrices en fonction de paramètres tels le diamètre des roues ou le freinage, ce qui ne répond pas à l'inconvénient mentionné ci-dessus.

US 2006/0124374 décrit un procédé d'assistance à la conduite automobile à quatre roues motrices selon le préambule de la revendication 1.

L'objet général de l'invention est donc de fournir un procédé d'assistance à la conduite d'un véhicule automobile améliorant les solutions existantes en obtenant particulièrement une amélioration des fonctions ESP et SQP.

En particulier, un objet de l'invention est de proposer un procédé d'assistance à la conduite d'un véhicule automobile dans une situation de conduite tout terrain.

A cet effet, l'invention repose sur un procédé d'assistance à la conduite d'un véhicule automobile à quatre roues motrices, caractérisé en ce qu'il comprend une première étape de communication d'au moins une information entre un module SQP de transfert de couples entre les roues motrices du véhicule et un module ESP de contrôle et de stabilité de la trajectoire d'un véhicule automobile et une seconde étape de prise en compte de cette information pour la mise en oeuvre d'une fonction d'assistance à la conduite du module recevant l'information.

De plus, le module SQP peut comprendre trois modes de fonctionnement, un premier mode pour la conduite à deux roues motrices, un second mode pour la conduite normale à quatre roues motrices, un troisième mode pour la conduite tout terrain à quatre roues motrices, et la première étape du procédé d'assistance peut comprendre la transmission du mode de fonctionnement du module SQP vers le module ESP.

Le procédé d'assistance à la conduite d'un véhicule automobile peut comprendre la communication de tout ou partie des informations suivantes du module SQP vers le module ESP :
- type de traction désirée par le conducteur ;
- type de traction effectivement réalisée ;
- la consigne de transfert de couples, et/ou de couple transféré, et tout ou partie des informations suivantes du module ESP vers le module SQP:
- état d'activation du système d'anti-patinage ;
- état d'activation du système de correction de trajectoire.

Lorsqu'à la première étape, le module ESP reçoit l'information du module SQP qu'il est dans le troisième mode pour la conduite tout terrain à quatre roues motrices, et que simultanément le conducteur a actionné un bouton de commande pour désactiver le module ESP, alors le module ESP peut passer dans un mode de fonctionnement limité dans lequel toutes ses fonctions de correction de trajectoire et de limitation du couple moteur sont désactivées.

Dans son mode de fonctionnement limité, le module ESP peut conserver uniquement une fonction de limitation de glissement de différentiel, mise en oeuvre par un actionnement du freinage, afin d'optimiser la motricité dans une situation de croisement de ponts.

Dans le mode de fonctionnement limité du module ESP, il peut mettre en oeuvre une activation de retour vers un autre mode actif du module ESP uniquement si le bouton de commande est actionné ou si le module SQP passe dans un mode différent et que la vitesse du véhicule est supérieure à un seuil de vitesse de reconnexion automatique prédéfini.

Lorsque le module SQP est dans le second mode pour la conduite normale à quatre roues motrices, l'activation de la fonction de correction de trajectoire du module ESP peut entraîner une remise à zéro de la consigne de transfert de couple du module SQP seulement si la vitesse du véhicule est supérieure à un premier seuil de vitesse prédéfini.

Lorsque le module SQP est dans le troisième mode pour la conduite tout terrain à quatre roues motrices, l'activation de la fonction de correction de trajectoire du module ESP peut entraîner une remise à zéro de la consigne de transfert de couple du module SQP seulement si la vitesse du véhicule est supérieure à un second seuil de vitesse prédéfini.

Le second seuil de vitesse peut être supérieur au premier seuil de vitesse.

Une régulation de type hystérésis peut être mise en place autour du seuil de vitesse lors de l'activation de la fonction de correction de trajectoire du module ESP pour éviter les phénomènes oscillatoires.

L'invention porte aussi sur un dispositif d'assistance à la conduite d'un véhicule automobile comprenant un module SQP et un module ESP, caractérisé en ce qu'il comprend un moyen de communication entre les deux modules SQP et ESP et un au moins un calculateur qui met en oeuvre le procédé d'assistance à la conduite tel que décrit précédemment.

Le dispositif d'assistance à la conduite peut comprendre un premier calculateur du module SQP qui met en oeuvre un pilotage de transfert de couples entre les quatre roues motrices d'un véhicule automobile et un second calculateur du module ESP qui met en oeuvre une première fonction d'anti-patinage et/ou une seconde fonction de correction de trajectoire du véhicule automobile, et le moyen de communication peut comprendre un bus permettant la communication entre les deux calculateurs.

L'invention porte aussi sur un véhicule automobile caractérisé en ce qu'il comprend un dispositif d'assistance à la conduite mettant en oeuvre le procédé d'assistance à la conduite tel que décrit précédemment.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente schématiquement les différentes fonctions d'un dispositif d'assistance selon un mode d'exécution de l'invention.
La figure 2 représente schématiquement le fonctionnement d'un dispositif d'assistance à la conduite selon le mode d'exécution de l'invention.

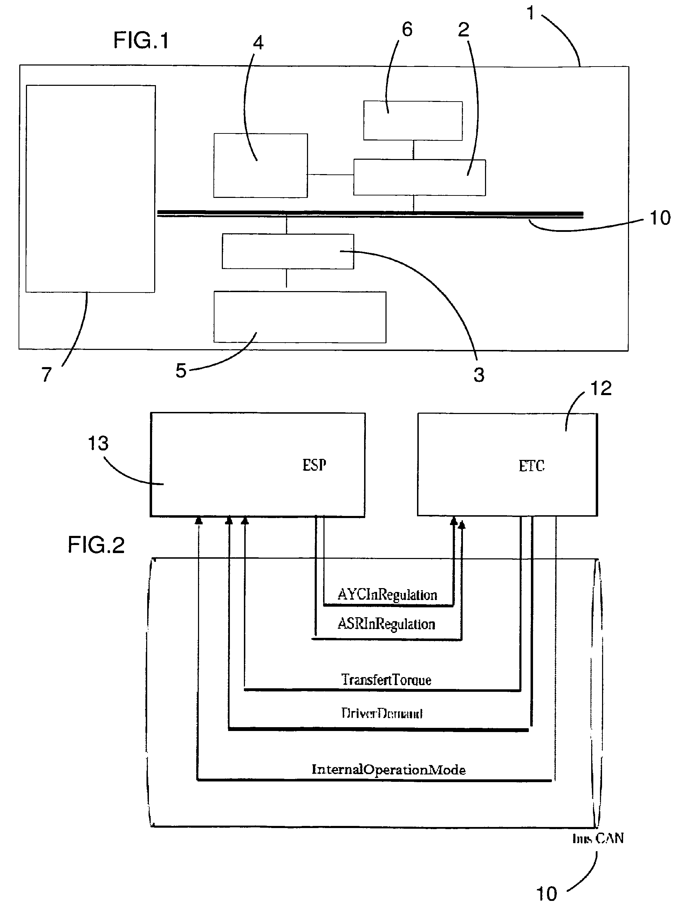

La figure 1 représente schématiquement un véhicule automobile 1, qui comprend un premier calculateur SQP 2, mettant en oeuvre les fonctions de pilotage de la motricité des différentes roues du véhicule automobile, et un second calculateur ESP 3, qui met en oeuvre les fonctions de contrôle et stabilité du véhicule automobile, notamment au moins une des fonctions d'anti-patinage et de correction de trajectoire. Le véhicule comprend de plus un interrupteur de commande 4 et un actionneur 6 reliés au premier calculateur SQP 2. Il comprend enfin un bouton de désactivation 5 relié au second calculateur ESP 3.

Selon le concept de l'invention, les deux calculateurs SQP 2 et ESP 3 sont reliés entre eux par un moyen de communication 10, qui les relie aussi au reste du véhicule 7 afin de mettre en oeuvre leurs fonctions respectives. Dans le mode d'exécution choisi, ce moyen de communication 10 est un bus CAN. En variante, il pourrait consister en tout autre moyen. D'autre part, les deux fonctions ESP et SQP sont mises en oeuvre à l'aide d'un moyen logiciel sur un calculateur propre. Toutefois, ces moyens logiciels distincts pourraient se trouver sur un même calculateur, comme un ordinateur de bord. De plus, les fonctions logiciel mises en oeuvre dans le cadre de ces fonctions ESP et SQP pourraient en variante être mises en oeuvre au moins partiellement par du matériel (hardware). Ainsi, le véhicule automobile comprend plus généralement un premier module SQP et un second module ESP qui peuvent consister en toute combinaison de matériel et/ou logiciel (hardware et/ou software) et qui communiquent entre eux par tout moyen de communication. Ces modules SQP et ESP sont aussi en communication avec différents capteurs du véhicule automobile de manière connue, comme des capteurs de vitesse des roues par exemple.

La figure 2 illustre l'interconnexion entre le module SQP 12 et le module ESP 13 du véhicule automobile, renfermant respectivement le calculateur SQP 2 et le calculateur ESP 3, qui échangent un certain nombre d'informations au travers du moyen de communication 10 lors de leur fonctionnement pour ainsi optimiser l'assistance à la conduite. Chaque module tient ensuite compte d'informations propres à l'autre module pour son propre fonctionnement, par exemple pour le choix d'un mode de fonctionnement parmi plusieurs modes prédéfinis. Cette interconnexion entre ces deux modules forme un procédé d'assistance à la conduite optimisé, dans lequel les différentes fonctions traitées par chaque module dépendent les unes des autres.

Dans, le mode d'exécution choisi, le module SQP 12 transmet au module ESP 13 les informations suivantes :
- Le type de traction désirée par le conducteur (paramètre appelé Driver Demand) parmi différentes possibilités, qui peuvent être sélectionnées par l'intermédiaire de l'interrupteur de commande 4, comme par exemple la conduite à deux roues motrices, à quatre roues motrices en conduite normale, ou à quatre roues motrices en conduite de type tout terrain. Le mode à deux roues motrices (également symbolisé « 4x2 ») correspond à l'absence de transmission de couple moteur au train arrière, et un glissement « libre » entre les essieux avant et arrière. Le mode à quatre roues motrices en conduite normale (également appelé « 4x4 auto ») permet la transmission d'une partie variable de la capacité maximale de couple moteur au train arrière en fonction des conditions de roulage, le glissement entre les essieux avant et arrière étant « limité ». Le mode quatre roues motrices en conduite de type tout-terrain correspond à la transmission de la totalité de la capacité maximale de couple moteur au train arrière, avec un glissement nul entre les essieux avant et arrière.
- Le type de traction réellement mis en oeuvre parmi les possibilités mentionnées au point précédent, véhiculé par le paramètre InternalOperationMode.
- La consigne de transfert de couple et/ou une estimation ou mesure du couple transféré (paramètre appelé Transfer Torque) aux différentes roues, par l'intermédiaire de l'actionneur 6.

De plus, le module ESP 13 transmet au module SQP 12 les informations suivantes :
- L'état activé ou non du système d'anti-patinage, par l'intermédiaire du paramètre nommé ASR In Regulation ;
- L'état activé ou non du système de correction de trajectoire, par l'intermédiaire du paramètre nommé AYC In Regulation.

En variante, ces deux modules pourraient n'échanger qu'une partie des informations mentionnées ci-dessus, et/ou d'autres informations.

Ainsi, l'invention porte sur un procédé d'assistance à la conduite d'un véhicule automobile, qui comprend une première étape de communication d'au moins une information entre un module SQP 12 et un module ESP 13 d'un véhicule automobile et une seconde étape de prise en compte de cette au moins une information pour le fonctionnement du module recevant l'information.

Dans le mode d'exécution choisi, la seconde étape est illustrée par le fonctionnement décrit ci-dessous.

Ainsi, lorsque le module ESP 13 reçoit l'information du module SQP 12 que le type de traction désirée par le conducteur est à quatre roues motrices en conduite de type tout terrain et que simultanément le conducteur a actionné le bouton de commande 5 pour désactiver l'ESP sur son tableau de bord, le module ESP passe dans un mode de fonctionnement limité dans lequel toutes ses fonctions de correction de trajectoire et de limitation du couple moteur sont désactivées, à l'exception éventuellement d'une fonction de limitation de glissement de différentiel, mise en oeuvre par un actionnement du freinage, afin d'optimiser la motricité par exemple dans une situation de croisement de ponts. De plus, la fonction de reconnexion automatique de l'ESP au-delà d'un seuil de vitesse, par exemple de 50 km/h, est désactivée.

Le module ESP n'est réactivé que si le conducteur actionne le bouton de commande 5 ou si le module SQP 12 passe dans un mode différent et que la vitesse du véhicule est supérieure au seuil de vitesse de reconnexion automatique du module ESP, par exemple au-delà de 50 km/h.

De plus, selon le mode d'exécution de l'invention, le système SQP adapte son fonctionnement en fonction des informations transmises par le module ESP.

En mode de conduite normale à quatre roues motrices du module SQP (mode « 4x4 auto) ainsi qu'en mode à deux roues motrices, l'activation de la fonction de correction de trajectoire du module ESP entraîne une remise à zéro de la consigne de transfert de couple du module SQP seulement si la vitesse du véhicule est supérieure à un premier seuil prédéfini, réglable. Pour éviter les phénomènes oscillatoires lors de cette opération, une régulation de type hystérésis est mise en place autour de ce premier seuil de vitesse. Cette adaptation du module SQP à partir du module ESP permet d'augmenter la sécurité du véhicule automobile dans son mode de fonctionnement en conduite normale à quatre roues motrices.

De manière similaire, en mode de conduite tout terrain à quatre roues motrices du module SQP, l'activation de la fonction de correction de trajectoire du module ESP entraîne une remise à zéro de la consigne de transfert de couple du module SQP si la vitesse du véhicule est supérieure à un second seuil prédéfini, réglable. Ce second seuil de vitesse est supérieur au premier seuil de vitesse mentionné ci-dessus. Pour éviter les phénomènes oscillatoires lors de cette opération, une régulation de type hystérésis est mise en place autour de ce second seuil de vitesse. Cette adaptation du module SQP à partir du module ESP permet d'améliorer la motricité du véhicule automobile dans son mode de fonctionnement en conduite tout terrain tout en garantissant une marge de sécurité acceptable par la conducteur.

Ainsi, le procédé d'assistance à la conduite fait dépendre le fonctionnement du module ESP du mode de fonctionnement du module SQP, qui peut occuper trois modes de fonctionnement, un premier mode pour la conduite à deux roues motrices, un second mode pour la conduite normale à quatre roues motrices, un troisième mode pour la conduite tout terrain à quatre roues motrices. Le module ESP peut alors notamment prendre un mode limité, voire désactivé. De manière similaire, le module SQP dépend du fonctionnement du module ESP, notamment de son intervention en correction de trajectoire par exemple.

La mise en oeuvre de ce procédé d'assistance à la conduite peut se faire par tout moyen logiciel et/ou matériel. Dans le mode d'exécution choisi, il consiste en une modification des moyens logiciel de chaque calculateur SQP 2 et ESP 3, pour leur ajouter une fonction de communication entre eux et les modifications de leur fonction d'assistance pour tenir compte des informations provenant de l'autre module. Naturellement, en variante, ces modules SQP et ESP peuvent être mis en oeuvre sur un même calculateur. Dans ce cas, leur communication peut consister en un échange d'informations entre deux blocs distincts d'un même logiciel.

Bien sûr, l'invention ne se limite pas à l'interconnexion décrite ci-dessus entre les modules SQP et ESP. Le concept de l'invention peut être mis en oeuvre pour permettre à chacun de ces deux modules de remplir leur fonction en prenant en compte des informations de l'autre module, comme son état, son mode de fonctionnement, et/ou toute donnée liée à son fonctionnement, afin d'adapter son propre fonctionnement à partir de ces informations. Par ce biais, l'assistance à la conduite n'est pas gérée par deux modules indépendants mais par deux modules interconnectés dont la cohabitation est optimisée.

L'invention est applicable à tout véhicule automobile comprenant un module SQP et un module ESP tels que décrits précédemment, définis par les fonctions qu'ils mettent en oeuvre.

## Revendications

1. Procédé d'assistance à la conduite d'un véhicule automobile à quatre roues motrices, comprenant une première étape de communication d'au moins une information entre un module SQP (12) de transfert de couples entre les roues motrices du véhicule et un module ESP (13) de contrôle et de stabilité de la trajectoire d'un véhicule automobile et une seconde étape de prise en compte de cette information pour la mise en oeuvre d'une fonction d'assistance à la conduite du module recevant l'information, **caractérisé en ce que** le module SQP (12) comprend trois modes de fonctionnement, un premier mode pour la conduite à deux roues motrices, un second mode pour la conduite normale à quatre roues motrices, un troisième mode pour la conduite tout terrain à quatre roues motrices, et **en ce que** la première étape du procédé d'assistance comprend la transmission du mode de fonctionnement du module SQP (12) vers le module ESP (13).

2. Procédé d'assistance à la conduite d'un véhicule automobile selon la revendication 1, **caractérisé en ce qu'**il comprend la communication de tout ou partie des informations suivantes du module SQP (12) vers le module ESP (13) :
- type de traction désirée par le conducteur ;
- type de traction effectivement réalisée ;
- la consigne de transfert de couples, et/ou de couple transféré, et tout ou partie des informations suivantes du module ESP (13) vers le module SQP (12) :
- état d'activation du système d'anti-patinage ;
- état d'activation du système de correction de trajectoire.

3. Procédé d'assistance à la conduite d'un véhicule automobile selon la revendication 1, **caractérisé en ce que** lorsqu'à la première étape, le module ESP (13) reçoit l'information du module SQP (12) qu'il est dans le troisième mode pour la conduite tout terrain à quatre roues motrices, et que simultanément le conducteur a actionné un bouton de commande (5) pour désactiver le module ESP (13), alors le module ESP (13) passe dans un mode de fonctionnement limité dans lequel toutes ses fonctions de correction de trajectoire et de limitation du couple moteur sont désactivées.

4. Procédé d'assistance à la conduite d'un véhicule automobile selon la revendication précédente, **caractérisé en ce que** dans son mode de fonctionnement limité, le module ESP (13) conserve uniquement une fonction de limitation de glissement de différentiel, mise en oeuvre par un actionnement du freinage, afin d'optimiser la motricité dans une situation de croisement de ponts.

5. Procédé d'assistance à la conduite d'un véhicule automobile selon la revendication 3 ou 4, **caractérisé en ce que** dans le mode de fonctionnement limité du module ESP (13), il met en oeuvre une activation de retour vers un autre mode actif du module ESP (13) uniquement si le bouton de commande (5) est actionné ou si le module SQP (12) passe dans un mode différent et que la vitesse du véhicule est supérieure à un seuil de vitesse de reconnexion automatique prédéfini.

6. Procédé d'assistance à la conduite d'un véhicule automobile selon l'une des revendications 1 à 5, **caractérisé en ce que** lorsque le module SQP (12) est dans le second mode pour la conduite normale à quatre roues motrices, l'activation de la fonction de correction de trajectoire du module ESP (13) entraîne une remise à zéro de la consigne de transfert de couple du module SQP (12) seulement si la vitesse du véhicule est supérieure à un premier seuil de vitesse prédéfini.

7. Procédé d'assistance à la conduite d'un véhicule automobile selon l'une des revendications 1 à 5, **caractérisé en ce que** lorsque le module SQP (12) est dans le troisième mode pour la conduite tout terrain à quatre roues motrices, l'activation de la fonction de correction de trajectoire du module ESP (13) entraîne une remise à zéro de la consigne de transfert de couple du module SQP (12) seulement si la vitesse du véhicule est supérieure à un second seuil de vitesse prédéfini.

8. Procédé d'assistance à la conduite d'un véhicule automobile selon les revendications 6 et 7, **caractérisé en ce que** le second seuil de vitesse est supérieur au premier seuil de vitesse.

9. Procédé d'assistance à la conduite d'un véhicule automobile selon l'une des revendications 6 à 8, **caractérisé en ce qu'**une régulation de type hystérésis est mise en place autour du seuil de vitesse lors de l'activation de la fonction de correction de trajectoire du module ESP (13) pour éviter les phénomènes oscillatoires.

10. Dispositif d'assistance à la conduite d'un véhicule automobile comprenant un module SQP (12) et un module ESP (13), **caractérisé en ce qu'**il comprend un moyen de communication (10) entre les deux modules SQP (12) et ESP (13) et un au moins un calculateur (2, 3) qui met en oeuvre le procédé d'assistance à la conduite selon l'une des revendications précédentes.

11. Dispositif d'assistance à la conduite d'un véhicule automobile selon la revendication précédente, **caractérisé en ce qu'**il comprend un premier calculateur (2) du module SQP (12) qui met en oeuvre un pilotage de transfert de couples entre les quatre roues motrices d'un véhicule automobile et un second calculateur (3) du module ESP (13) qui met en oeuvre une première fonction d'anti-patinage et/ou une seconde fonction de correction de trajectoire du véhicule automobile, et **en ce que** le moyen de communication (10) comprend un bus permettant la communication entre les deux calculateurs (2, 3).

12. Véhicule automobile **caractérisé en ce qu'**il comprend un dispositif d'assistance à la conduite mettant en oeuvre le procédé d'assistance à la conduite selon l'une des revendications 1 à 9.

## Patentansprüche

1. Fahrassistenzverfahren eines Kraftfahrzeugs mit Vierradantrieb, das einen ersten Schritt der Übermittlung mindestens einer Information zwischen einem Modul SQP (12) der Drehmomentübertragung zwischen den Antriebsrädern des Fahrzeugs und einem Modul ESP (13) eines elektronischen Stabilitätsprogramms eines Kraftfahrzeugs und einen zweiten Schritt der Berücksichtigung dieser Information zur Anwendung einer Fahrassistenzfunktion des die Information empfangenden Moduls enthält, **dadurch gekennzeichnet, dass** das Modul SQP (12) drei Betriebsarten enthält, eine erste Betriebsart für die Fahrt mit zwei Antriebsrädern, eine zweite Betriebsart für die normale Fahrt mit vier Antriebsrädern, eine dritte Betriebsart für die Geländefahrt mit Vierradantrieb, und dass der erste Schritt des Assistenzverfahrens die Übertragung der Betriebsart des Moduls SQP (12) zum Modul ESP (13) enthält.

2. Fahrassistenzverfahren eines Kraftfahrzeugs nach Anspruch 1, **dadurch gekennzeichnet, dass** es die Übermittlung von allen oder einem Teil der folgenden Informationen vom Modul SQP (12) zum Modul ESP (13) enthält:
- vom Fahrer gewünschte Antriebsart;
- tatsächlich ausgeführte Antriebsart;
- den Sollwert der Übertragung von Drehmomenten und/oder eines übertragenen Drehmoments, und alle oder einen Teil der folgenden Informationen vom Modul ESP (13) zum Modul SQP (12) :
- Aktivierungszustand des Antischlupfsystems;
- Aktivierungszustand des Spurkorrektursystems.

3. Fahrassistenzverfahren eines Kraftfahrzeugs nach Anspruch 1, **dadurch gekennzeichnet, dass**, wenn im ersten Schritt das Modul ESP (13) vom Modul SQP (12) die Information empfängt, dass es in der dritten Betriebsart für die Geländefahrt mit Vierradantrieb ist, und wenn gleichzeitig der Fahrer einen Steuerknopf (5) aktiviert hat, um das Modul ESP (13) zu deaktivieren, das Modul ESP (13) in einen begrenzten Betriebsmodus übergeht, in dem alle seine Spurkorrektur- und Motordrehmomentbegrenzungsfunktionen deaktiviert sind.

4. Fahrassistenzverfahren eines Kraftfahrzeugs nach dem vorhergehenden Anspruch, **dadurch gekennzeichnet, dass** das Modul ESP (13) in seiner begrenzten Betriebsart nur eine Differentialschlupf-Begrenzungsfunktion beibehält, die durch eine Betätigung der Bremsung angewendet wird, um die Motorik in einer Situation der Achsverschränkung zu optimieren.

5. Fahrassistenzverfahren eines Kraftfahrzeugs nach Anspruch 3 oder 4, **dadurch gekennzeichnet, dass** es in der begrenzten Betriebsart des Moduls ESP (13) eine Aktivierung der Rückkehr in eine andere aktive Betriebsart des Moduls ESP (13) nur dann anwendet, wenn der Steuerknopf (5) betätigt wird, oder wenn das Modul SQP (12) in eine andere Betriebsart übergeht und die Geschwindigkeit des Fahrzeugs höher als eine vordefinierte Geschwindigkeitsschwelle der automatischen Wiederverbindung ist.

6. Fahrassistenzverfahren eines Kraftfahrzeugs nach einem der Ansprüche 1 bis 5, **dadurch gekennzeichnet, dass**, wenn das Modul SQP (12) in der zweiten Betriebsart für die normale Fahrt mit Vierradantrieb ist, die Aktivierung der Spurkorrekturfunktion des Moduls ESP (13) eine Nullrückstellung des Drehmomentübertragungssollwerts des Moduls SQP (12) nur dann nach sich zieht, wenn die Geschwindigkeit des Fahrzeugs höher als eine erste vordefinierte Geschwindigkeitsschwelle ist.

7. Fahrassistenzverfahren eines Kraftfahrzeugs nach einem der Ansprüche 1 bis 5, **dadurch gekennzeichnet, dass**, wenn das Modul SQP (12) in der dritten Betriebsart für die Geländefahrt mit Vierradantrieb ist, die Aktivierung der Spurkorrekturfunktion des Moduls ESP (13) eine Nullrückstellung des Drehmomentübertragungssollwerts des Moduls SQP (12) nur dann nach sich zieht, wenn die Geschwindigkeit des Fahrzeugs höher als eine zweite vordefinierte Geschwindigkeitsschwelle ist.

8. Fahrassistenzverfahren eines Kraftfahrzeugs nach den Ansprüchen 6 und 7, **dadurch gekennzeichnet**, die zweite Geschwindigkeitsschwelle höher als die erste Geschwindigkeitsschwelle ist.

9. Fahrassistenzverfahren eines Kraftfahrzeugs nach einem der Ansprüche 6 bis 8, **dadurch gekennzeichnet, dass** eine Regelung von der Art Hysterese um die Geschwindigkeitsschwelle herum bei der Aktivierung der Spurkorrekturfunktion des Moduls ESP (13) eingesetzt wird, um die Schwingungsphänomene zu vermeiden.

10. Fahrassistenzvorrichtung eines Kraftfahrzeugs, das ein Modul SQP (12) und ein Modul ESP (13) enthält, **dadurch gekennzeichnet, dass** sie eine Verbindungseinrichtung (10) zwischen den zwei Modulen SQP (12) und ESP (13) und mindestens einen Rechner (2, 3) enthält, der das Fahrassistenzverfahren nach einem der vorhergehenden Ansprüche anwendet.

11. Fahrassistenzvorrichtung eines Kraftfahrzeugs nach dem vorhergehenden Anspruch, **dadurch gekennzeichnet, dass** sie einen ersten Rechner (2) des Moduls SQP (12), der eine Drehmomentübertragungssteuerung zwischen den vier Antriebsrädern eines Kraftfahrzeugs anwendet, und einen zweiten Rechner (3) des Moduls ESP (13) enthält, der eine erste Antischlupffunktion und/oder eine zweite Spurkorrekturfunktion des Kraftfahrzeugs anwendet, und dass die Übermittlungseinrichtung (10) einen Bus enthält, der die Verbindung zwischen den zwei Rechnern (2, 3) erlaubt.

12. Kraftfahrzeug, **dadurch gekennzeichnet, dass** es eine Fahrassistenzvorrichtung enthält, die das Fahrassistenzverfahren nach einem der Ansprüche 1 bis 9 anwendet.

## Claims

1. Method for assisting the driving of a four-wheel-drive motor vehicle, comprising a first step of communicating at least one item of information between an SQP module (12) for the transfer os torques between the drive wheels of the vehicle and an ESP module (13) for the control and stability of the trajectory of a motor vehicle and a second step of taking account of this item of information for the application of a driving assistance function of the module receiving the item of information, **characterized in that** the SQP module (12) comprises three operating modes, a first mode for driving with two-wheel-drive, a second mode for normal driving with four-wheel-drive, a third mode for off-road driving with four-wheel-drive, and **in that** the first step of the assistance method comprises the transmission of the operating mode of the SQP module (12) to the ESP module (13).

2. Method for assisting the driving of a motor vehicle according to Claim 1, **characterized in that** it comprises the communication of all or some of the following items of information from the SQP module (12) to the ESP module (13):
- type of traction desired by the driver;
- type of traction actually achieved;
- setpoint of torque transfer, and/or of torque transferred, and some or all of the following items of information from the ESP module (13) to the SQP module (12):
- state of activation of the anti-skid system;
- state of activation of the trajectory correction system.

3. Method for assisting the driving of a motor vehicle according to Claim 1, **characterized in that**, when, during the first step, the ESP module (13) receives the item of information from the SQP module (12) that it is in the third mode for off-road driving with four-wheel-drive, and when simultaneously the driver has actuated a control button (5) to deactivate the ESP module (13), the ESP module (13) switches to a limited operating mode in which all its trajectory correction and drive torque limiting functions are deactivated.

4. Method for assisting the driving of a motor vehicle according to the preceding claim, **characterized in that**, in its limited operating mode, the ESP module (13) retains only a limited-slip differential function, implemented by an actuation of braking, in order to optimize driveability in a drive-axle crossover situation.

5. Method for assisting the driving of a motor vehicle according to Claim 3 or 4, **characterized in that**, in the limited operating mode of the ESP module (13), it implements an activation of returning to another active mode of the ESP module (13) only if the control button (5) is actuated or if the SQP module (12) switches into a different mode and the speed of the vehicle is above a predefined automatic reconnection speed threshold.

6. Method for assisting the driving of a motor vehicle according to one of Claims 1 to 5, **characterized in that**, when the SQP module (12) is in the second mode for normal driving with four-wheel-drive, the activation of the trajectory correction function of the ESP module (13) causes a reset of the torque transfer setpoint of the SQP module (12) to zero only if the speed of the vehicle is higher than a first predefined speed threshold.

7. Method for assisting the driving of a motor vehicle according to one of Claims 1 to 5, **characterized in that**, when the SQP module (12) is in the third mode for off-road driving with four-wheel-drive, the activation of the trajectory correction function of the ESP module (13) causes a reset of the torque transfer setpoint of the SQP module (12) to zero only if the speed of the vehicle is higher than a predefined second speed threshold.

8. Method for assisting the driving of a motor vehicle according to Claims 6 and 7, **characterized in that** the second speed threshold is higher than the first speed threshold.

9. Method for assisting the driving of a motor vehicle according to one of Claims 6 to 8, **characterized in that** a regulation of the hysteresis type is put in place around the speed threshold during the activation of the trajectory correction function of the ESP module (13) in order to prevent oscillatory phenomena.

10. Device for assisting the driving of a motor vehicle comprising an SQP module (12) and an ESP module (13), **characterized in that** it comprises a means of communication (10) between the two modules, the SQP module (12) and ESP module (13), and at least one computer (2, 3) which implements the driving assistance method according to one of the preceding claims.

11. Device for assisting the driving of a motor vehicle according to the preceding claim, **characterized in that** it comprises a first computer (2) of the SQP module (12) which implements a controlling of torque transfer between the four drive wheels of a motor vehicle and a second computer (3) of the ESP module (13) which implements a first anti-skid function and/or a second trajectory-correction function of the motor vehicle, and **in that** the communication means (10) comprises a bus allowing the communication between the two computers (2, 3).

12. Motor vehicle, **characterized in that** it comprises a driving assistance device implementing the driving assistance method according to one of Claims 1 to 9.
